# DEMANDE DE BREVET EUROPEEN

(11) **EP 1 814 072 A1**
(43) Date de publication de la demande: **01.08.2007**
(21) Numéro de dépôt: 07290022.8
(22) Date de dépôt: 08.01.2007
(51) Int. Cl.: G06Q 30/00

(54) **Procédé permettant le suivi de plateaux de service soumis à des actions déterminées**

(30) Priorité: 06.01.2006 FR 0650060
(71) Demandeur: Platex Composites, 92700 Colombes (FR)
(72) Inventeur: Warnod, Marc, 92200 Neuilly sur Seine (FR)
(74) Mandataire: Breese Derambure Majerowicz

(57) **Abrégé**

L'invention concerne un procédé permettant le suivi de plateaux de service (1) soumis à des actions déterminées, telles que leur lavage, leur chargement sur des chariots de transport leur remise en température pour les liaisons chaudes et leur distribution, chacun des plateaux (1) comprenant une mémoire (10) apte à recevoir, stocker et restituer des informations transmises à distance par un ou plusieurs équipements de communication lesquels sont associés respectivement à une des actions, ledit procédé comprenant les étapes successives suivantes :
- une étape d'enregistrements, dans la mémoire du plateau (1), d'informations transmises par les équipements de communication associées auxdites actions, lesdites informations comprenant au moins un signal d'horloge d'une part et un identifiant de chaque équipement de communication concerné d'autre part, chaque enregistrement étant déclenché en réponse à une commande d'enregistrement ;
- une étape de déchargement des informations contenues dans la mémoire (10) du plateau (1) par un équipement de lecture, de sorte à établir un historique complet des informations sur les actions réalisées.

## Description

L'invention concerne le suivi de plateaux de service en milieu hospitalier.

Par plateau de service, on entend un support comprenant une surface sensiblement plane, destiné à transporter des repas. D'autres utilisations peuvent être prévues, comme par exemple le transport de médicaments.

Dans le domaine médical, il est devenu courant que les déficiences ou erreurs d'ordre humain ou organisationnels soient suivies d'actions judiciaires. En effet, dans les structures médicales, telles que les hôpitaux, les cliniques, les maisons de retraite, etc., la distribution des repas est associée à une série d'actions, telles que le chargement sur des chariots, la distribution et le lavage de plateaux, au cours desquelles des erreurs ou des dysfonctionnements peuvent avoir lieu, avec des conséquences plus ou moins graves.

Aussi, afin de se prémunir d'éventuelles actions judiciaires, il s'avère nécessaire de pourvoir garantir et prouver l'intégrité de la distribution de repas au travers de mesures de suivi, de vérification et d'identification d'éventuels dysfonctionnements ou erreurs dans la distribution.

L'invention vise notamment à répondre à cette attente en proposant un plateau de service « intelligent » permettant, en combinaison avec un dispositif associé, de suivre son parcours au travers de postes d'actions déterminées.

A cet effet, et selon un premier aspect, l'invention concerne un procédé permettant le suivi de plateaux de service soumis à des actions déterminées, telles que leur lavage, leur chargement sur des chariots de transport et leur distribution, chacun des plateaux comprenant une mémoire apte à recevoir, stocker et à restituer des informations transmises à distance par un ou plusieurs équipements de communication lesquels sont associés respectivement à une des actions, ledit procédé comprenant les étapes successives suivantes :
- une étape d'enregistrements, dans la mémoire du plateau, d'informations transmises par les équipements de communication associées auxdites actions, lesdites informations comprenant au moins un signal d'horloge d'une part et un identifiant de chaque équipement de communication concerné d'autre part, chaque enregistrement étant déclenché en réponse à une commande d'enregistrement ;
- une étape de déchargement des informations contenues dans la mémoire du plateau par un équipement de lecture, de sorte à établir un historique complet des informations sur les actions réalisées.

Selon une configuration préférée de l'invention, le procédé comporte également une étape de comparaison des informations déchargées, avec un référentiel d'informations, de sorte à relever d'éventuels dysfonctionnements. Cette opération est réalisée via une unité centrale de stockage et de traitement, dans laquelle le référentiel d'informations a été enregistré. Les informations déchargées de chaque plateau sont alors transférées dans cette unité centrale où elles sont stockées et comparées au référentiel d'informations.

De préférence, on prévoit un enregistrement préalable, dans la mémoire, d'informations relatives à l'identification de la personne à qui le plateau est destiné et/ou d'informations relatives au personnel associé aux actions à mener, et en particulier le personnel intervenant dans la fabrication et la distribution des repas.

De même, et avantageusement, une étape d'identification de l'opérateur responsable de l'action à mener peut être prévue préalablement à l'étape d'envoi d'informations par l'élément de lecture.

Les informations envoyées par les équipements de communication se rapportent à l'action à laquelle le plateau va ou vient d'être soumis. Elles concerneront principalement des informations sur la date et l'heure relatives à chaque action déterminée à laquelle le plateau est soumis.

Selon une configuration particulière de l'invention, l'envoi d'informations par l'équipement de communication est commandé manuellement. Il pourra être cependant également prévu que l'envoi d'informations soit déclenché lors de la détection par ledit équipement de la présence dudit plateau dans un rayon d'un mètre environ autour de l'équipement de communication.

Avantageusement, la mémoire est formée par une étiquette radiofréquence électronique dont le contenu est apte à être lu à distance.

Avantageusement, l'équipement de communication comprend un chariot de transport de plateau pourvu d'au moins un lecteur/émetteur radiofréquence. Par « chariot de transport », on entend les chariots configurés pour maintenir les repas en température, les chariots en liaison chaude ainsi que les chariots neutres (i.e. n'ayant aucune action spécifique).

Selon un deuxième aspect, l'invention concerne un plateau de service pour la mise en oeuvre du procédé décrit précédemment, ledit plateau comprenant au moins une mémoire formée par une étiquette radiofréquence électronique dont le contenu est apte à être lu à distance.

De tels plateaux permettent ainsi de « porter » directement des informations ayant trait à des postes d'actions auxquels sont soumis lesdits plateaux (laverie, distribution, stockage), les informations comprenant notamment la date, l'heure, l'identification de la personne à qui le plateau a été distribué et éventuellement des informations spécifiques à chaque poste d'actions.

Selon une première configuration de l'invention, le plateau de service comprend au moins deux couches superposées de résine thermodurcissable, entre lesquelles est disposée au moins une mémoire.

Selon une autre configuration de l'invention, le plateau de service comprend un bord latéral pourvu d'au moins logement destiné à recevoir une mémoire. Dans cette configuration, la mémoire est fixée par l'intermédiaire d'une résine ou d'un gel.

Avantageusement, la mémoire est recouverte d'un film de protection, s'étendant de préférence jusqu'au bord périphérique du plateau de service.

Par ailleurs, il peut être également prévu que le plateau de service comporte une couche intermédiaire apte à porter ou à constituer un décor.

Selon un troisième aspect, l'invention concerne un chariot de transport destiné à transporter des plateaux tels que décrit précédemment, le chariot comportant un lecteur/émetteur radiofréquence apte à être associé avec les étiquettes radiofréquence électroniques équipant les plateaux, ainsi qu'un écran vidéo affichant l'identifiant et l'emplacement dans le chariot de chacun des plateaux.

D'autres objets et avantages de l'invention apparaîtront au cours de la description qui suit, faite en référence à la figure unique dans laquelle est illustrée une représentation schématique d'un cycle de distribution de plateaux dans un hôpital.

Comme cela a été décrit précédemment, le suivi de plateaux de service est réalisé au moyen de mémoires (ou éléments de stockage d'informations), intégrées dans lesdits plateaux, lesquelles mémoires sont « associées » à un ou plusieurs équipements de communication. Ainsi, les équipements de communication permettent la transmission, à distance, d'informations à des plateaux pourvus d'au moins une mémoire, et la lecture des informations stockées dans lesdites mémoires. De même, les plateaux pourvus de mémoires sont aptes à recevoir et stocker des informations transmises à distance par un ou des équipement de communication.

La mémoire est en particulier constituée par une étiquette électronique identifiable par radiofréquence. Ainsi, chaque plateau est pourvu d'une étiquette radiofréquence. Le procédé de fabrication de tels plateaux sera décrit plus loin.

En référence à la figure unique, on décrit le suivi de plateaux de service 1 dont la distribution est caractérisée par une série de cycles d'actions :
- un cycle de nettoyage des plateaux 1 dans un poste spécifique 2 nommé « poste Laverie »,
- un cycle de chargement des repas sur les plateaux 1, lequel se déroule dans un poste spécifique nommé « poste Laboratoire » ,
- un cycle de chargement des plateaux 1 sur des chariots de transports 3,
- un cycle de distribution des plateaux 1 à leurs destinataires respectifs (les patients), correspondant à un poste nommé poste de « Distribution »,
- un cycle de reprise des plateaux 1 remis, correspondant également au poste de « Distribution ».

Il est bien entendu évident que la distribution des plateaux peut ne pas se limiter aux cycles décrits ci-dessus.

Chaque poste d'actions est équipé d'au moins un équipement de communication (non représenté) de manière à établir des informations spécifiques à l'action réalisée ou à réaliser lors de chaque cycle, et de répertorier ces informations. Il pourra s'agir par exemple d'un poste filaire, d'un équipement sans fil (WFi, etc.), d'un équipement à mémoire déchargeable manuellement ou automatiquement, type PDA, etc.

En particulier, le poste « Laverie » 2 est pourvu, en entrée et en sortie, d'un équipement de communication. Ainsi, à chaque entrée de plateaux dans le poste de nettoyage, l'équipement de communication d'entrée envoie, à chacun des plateaux 1 pourvu d'une étiquette électronique radiofréquence 10 formant mémoire, des informations telles que la date et l'heure à laquelle le cycle de lavage du plateau 1 commence. Il pourra être également prévu d'envoyer des informations relatives au cycle de lavage même, telles que la durée prévue, la température appliquée, etc. De la même manière, l'équipement de communication de sortie envoie à chaque plateau 1 sortant du poste « Laverie » des informations similaires à celles décrites précédemment, et notamment l'heure à laquelle le lavage de chaque plateau 1 a pris fin. Il est bien entendu évident que le poste « Laverie » pourra comprendre qu'un seul équipement de communication disposé en entrée ou en sortie du poste.

Une fois lavés, les plateaux sont alors stockés en attendant leur chargement de repas.

Lorsque le cycle de chargement est lancé, l'opérateur responsable du chargement actionne un équipement de communication spécifique au poste « Laboratoire ». Les informations, alors envoyées à chaque plateau 1 et stockées dans chacune des étiquettes radiofréquence, sont relatives à l'identité de la personne (patient) devant recevoir le plateau (LIT 212), le type de repas disposé sur le plateau 1 (Menu 25) et l'heure à laquelle le chargement du plateau 1 a débuté et s'est terminé. Ainsi, le chargement du plateau 1 pour Mr Dufour, Lit 212, a débuté à 19h32 et a pris fin à 19h45 ; il a été chargé du Menu 25. En outre, il peut être prévu que les informations envoyées comprennent également une identification de l'opérateur responsable du chargement des repas sur le plateau 1, ainsi que des indications spécifiques au repas (notamment une indication relative à la température à laquelle le repas doit être remis au patient).

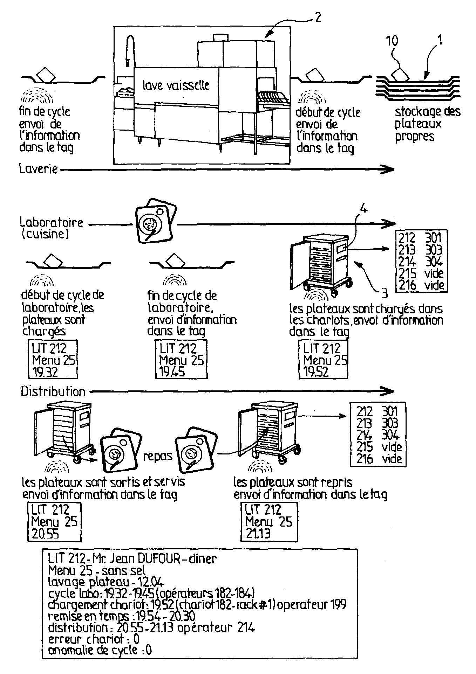

Une fois chargés, les plateaux 1 sont alors disposés dans un chariot de transport 3 pour leur distribution auprès des patients identifiés avec chaque étiquette radiofréquence. Une nouvelle information relative à l'heure de chargement des plateaux 1 dans le chariot 3 est alors envoyée par l'équipement de communication ayant servi pour le chargement des repas sur les plateaux 1, ou bien par un équipement de communication différent ; et stockée dans chacun des plateaux 1. Ainsi, comme illustré sur la figure 1, le plateau de Mr Dufour, lit 212, a été chargé dans le chariot à 19h52 (cf. cycle « Laboratoire »).

Par ailleurs, lorsque le chariot de transport est un chariot de liaison chaude, les étiquettes, portant avantageusement des indications relatives à la température à laquelle les repas doivent être remis, activent, pour chacun des plateaux 1 transportés concernés, la fonctionnalité de remise en température du chariot. Lesdites étiquettes contribuent ainsi au pilotage de la température dudit chariot.

Avantageusement, chaque chariot 3 porte son propre équipement de communication destiné à envoyer l'information de chargement au plateau 1. Il est bien entendu évident qu'à chaque plateau 1 disposé dans le chariot 3 pourra être associé un équipement de communication spécifique.

Selon une configuration préférée, ledit équipement de communication comprend un écran 4 sur lequel est indiqué la position du plateau 1 dans le chariot 3. Ainsi, sur l'écran 4 de l'équipement de communication du chariot 3 illustré sur la figure, il apparaît que le plateau de Mr Dufour, Lit 212, a été chargé sur la partie gauche de l'étagère supérieure du chariot 3. Cette visualisation de l'emplacement des plateaux 1 dans le chariot 3 permet ainsi de limiter les risques d'inversion de plateaux 1 au moment de leur distribution. En outre, la « programmation » du chariot 3 n'est alors plus nécessaire, les informations contenues dans les étiquettes de chacun des plateaux permettant de piloter directement la « programmation » du chariot 3. Par programmation du chariot, on entend la répartition des plateaux en fonction de l'itinéraire dudit chariot parmi les chambres de patients.

Lors du cycle de distribution, lorsque les plateaux 1 sont retirés du chariot 3, l'équipement de communication envoie l'information relative à l'heure de retrait des plateaux 1 et correspondant à la remise des plateaux 1 à la personne concernée. Ainsi, le plateau de Mr Dufour, Lit 212, a été sorti du chariot 3 et remis à Mr Dufour à 20h55. En parallèle, l'écran 4 de l'équipement de communication indique l'absence du plateau. Par ailleurs, de même que lors de l'étape de chargement, il sera préféré, dans un souci de traçabilité précise, que les informations envoyées comprennent également une identification de l'opérateur responsable de la distribution des repas.

De la même manière, lorsque les plateaux sont repris et chargés à nouveau dans le chariot, l'équipement de communication, manuellement ou automatiquement piloté, détecte l'entrée des plateaux 1 dans le chariot, envoie l'information (heure) du retour des plateaux dans le chariot, l'écran de l'élément de lecture indiquant simultanément la présence des plateaux dans le chariot ainsi que leur emplacement.

Avantageusement, les informations transmises lors du chargement, du retrait et de la remise des plateaux 1 dans le chariot 3 sont déclenchées automatiquement, lors de la détection par l'équipement de communication de la présence d'une étiquette radiofréquence dans son champ de réception.

Un tel suivi des plateaux permet ainsi de vérifier le fonctionnement de la distribution des repas et identifier à tout moment des dysfonctionnements.

Dans une configuration avantageuse de l'invention, les informations stockées dans les étiquettes au cours du cycle complet de distribution sont transférées vers des moyens de stockage distants (unité centrale). Ainsi, un historique précis de tous les cycles de distribution réalisés est conservé, permettant ainsi d'apporter à tout moment les preuves de l'intégrité des distributions de repas ou de révéler des dysfonctionnements.

Il va être à présent décrit à présent les différents modes de fabrication mis en oeuvre pour réaliser de tels plateaux porteurs d'informations, selon que l'étiquette est « encapsulée » dans la matière du plateau, ou bien logée dans une cavité du plateau prévue à cet effet.

Ainsi, un plateau de service dans lequel l'étiquette radiofréquence est « encapsulée » est fabriqué de la façon suivante.

La première étape consiste à préparer en premier lieu une préforme de matériau thermodurcissable, laquelle préforme se présente en deux parties distinctes. Les parties se présentent sous la forme d'une ou plusieurs couches de préimprégné du type SMC ou de prémix du type BMC, ou de films de papier imprégnés de résine phénolique et/ou de résine mélamine, selon que le plateau souhaité est un plateau en polyester ou un plateau mélaminé. Les première et deuxième parties constitueront respectivement les parties inférieure et supérieure du plateau, ou inversement.

L'étiquette radiofréquence est alors disposée sur une des parties de la préforme, puis recouverte par l'autre partie. On charge alors un moule destiné à la fabrication du plateau avec les parties de la préforme assemblées, puis on procède au moulage selon les conditions de température, de pression et de durée adaptées au matériau thermodurcissable employé. En tout état de cause, la température de moulage sera comprise entre 90°C et 200°C et la pression de moulage comprise entre 25 Kg/cm² et 100 Kg/cm².

De la même manière, la durée de moulage sera adaptée à l'aptitude à polymériser du matériau thermodurcissable employé. La durée de moulage sera d'au moins 30 secondes.

Selon une configuration particulière du plateau de service où l'étiquette radiofréquence est insérée en surface, qu'il s'agisse de la surface de dessus ou de dessous du plateau, la fabrication des plateaux service sera comme suit.

La première étape consiste à déposer sur l'étiquette radiofréquence un film de protection, afin de la protéger des agressions intervenant d'une part au cours de la fabrication du plateau (abrasion, température et pression de moulage), et d'autre part lors de l'utilisation du plateau.

Dans cette optique, il pourra être également avantageux de préparer éventuellement l'étiquette radiofréquence lors d'une étape préalable d'enrobage de ladite étiquette dans un matériau thermodurcissable compatible avec le matériau dans lequel le plateau doit être réalisé.

Une fois l'étiquette radiofréquence protégée, celle-ci est disposée dans le moule, le film de protection étant mis au contact dudit moule. Lors de cette étape, l'étiquette sera positionnée dans le moule de façon à prendre l'emplacement souhaité sur ledit plateau une fois ce dernier formé. Il est à noter qu'à cet effet, on aura également pris soin, lors de l'étape précédente, d'apposer le film de protection sur l'étiquette en vue de son placement dans ledit moule.

Le moule est alors chargé manuellement ou mécaniquement, avec une matière thermodurcissable, recouvrant ladite étiquette radiofréquence, ladite matière étant de préférence préformée.

Selon une première configuration de plateau, la matière avec laquelle le moule est chargé consiste en un préimprégné du type SMC ou un prémix du type BMC. Selon une autre configuration de plateau, le matériau thermodurcissable est une préforme constituée d'un ou plusieurs films de papier imprégnés de résine phénolique et/ou de résine mélamine selon la résistance du plateau souhaitée. Selon une configuration préférée, la préforme sera constituée d'une ou plusieurs couche(s) de Kraft phénolique enveloppée par une ou plusieurs couche(s) de mélamine. Afin d'accroître la résistance du plateau obtenu, une couche complémentaire sera éventuellement déposée dans la couche de Kraft phénolique, constituant ainsi l'âme du plateau. De même, le plateau pourra porter un décor particulier. Pour ce faire, une feuille intermédiaire portant le décor sera disposée sous la couche de mélamine, pour recouvrir toute ou partie de la couche de Kraft phénolique.

Une fois le moule chargé, on procède au moulage selon des conditions de température et de pression décrites précédemment. A l'issue de l'opération de moulage, la couche de mélamine est devenue transparente.

Fabrication d'un plateau avec une étiquette radiofréquence insérée dans un logement : merci de décrire la technique d'insert après moulage.

Il est décrit dans ce qui précède l'insertion en surface ou dans la matière du plateau une étiquette radiofréquence. Il est bien entendu évident que l'invention ne se limite à la présence d'une étiquette par plateau, un plateau pouvant comporter plusieurs étiquettes radiofréquences, chaque étiquette pouvant en outre être associée à un lecteur spécifique en vue d'une utilisation particulière.

L'invention est décrite dans ce qui précède à titre d'exemple. Il est entendu que l'homme du métier est à même de réaliser différentes variantes de l'invention sans pour autant sortir de l'invention.

## Revendications

1. Procédé permettant le suivi de plateaux de service (1) soumis à des actions déterminées, telles que leur lavage, leur chargement sur des chariots de transport et leur distribution, chacun des plateaux (1) comprenant une mémoire (10) apte à recevoir, stocker et restituer des informations transmises à distance par un ou plusieurs équipements de communication lesquels sont associés respectivement à une des actions, ledit procédé comprenant les étapes successives suivantes :
- une étape d'enregistrements, dans la mémoire du plateau (1), d'informations transmises par les équipements de communication associées auxdites actions, lesdites informations comprenant au moins un signal d'horloge d'une part et un identifiant de chaque équipement de communication concerné d'autre part, chaque enregistrement étant déclenché en réponse à une commande d'enregistrement ;
- une étape de déchargement des informations contenues dans la mémoire (10) du plateau (1) par un équipement de lecture, de sorte à établir un historique complet des informations sur les actions réalisées.

2. Procédé de suivi de plateau selon la revendication 1, **caractérisé en ce qu'**il comporte en outre une étape de comparaison par une unité centrale de stockage et de traitement des informations déchargées, avec un référentiel d'informations préalablement enregistré dans ladite unité centrale, de sorte à relever d'éventuels dysfonctionnements.

3. Procédé de suivi de plateau selon la revendication 1 ou la revendication 2, **caractérisé en ce qu'**il comprend une étape préalable d'enregistrement dans la mémoire (10) du plateau (1) d'un identifiant du destinataire du plateau (1) et/ou d'informations relatives aux opérateurs associés aux actions à mener.

4. Procédé de suivi de plateaux de service selon l'une quelconque des revendications précédentes, **caractérisé en ce qu'**il comporte, préalablement à l'enregistrement d'informations, une étape d'identification de l'opérateur associé à l'action menée.

5. Procédé de suivi de plateaux de service selon l'une quelconque des revendications précédentes, **caractérisé en ce que** la transmission des informations par l'équipement de communication à un plateau (1) est commandée lors de la détection par ledit équipement de la présence dudit plateau (1) dans un rayon d'un mètre environ autour de l'équipement de communication.

6. Procédé de suivi de plateaux de service selon l'une quelconque des revendications précédentes, **caractérisé en ce que** la transmission d'informations est commandée manuellement.

7. Procédé de suivi de plateaux de service selon l'une quelconque des revendications précédentes, **caractérisé en ce que** la mémoire (10) est formée par une étiquette radiofréquence électronique.

8. Procédé de suivi de plateaux de service selon l'une quelconque des revendications précédentes, **caractérisé en ce que** l'équipement de communication comprend un chariot (3) de transport de plateau (1) pourvu d'au moins un lecteur/émetteur radiofréquence.

9. Plateau de service (1) pour la mise en oeuvre du procédé selon l'une quelconque des revendications précédentes, **caractérisé en ce qu'**il comprend au moins une mémoire (10) consistant en une étiquette radiofréquence électronique.

10. Plateau de service (1) pour la mise en oeuvre du procédé selon la revendication 9, **caractérisé en ce qu'**il comprend au moins deux couches superposées de résine thermodurcissable, entre lesquelles est disposée au moins une mémoire.

11. Plateau de service (1) selon la revendication 9, **caractérisé en ce que** le plateau comprend un bord latéral pourvu d'un ou plusieurs logement(s) destiné(s) à recevoir une mémoire

12. Plateau de service (1) selon la revendication précédente, **caractérisé en ce** la mémoire est immobilisée dans le logement au moyen d'une résine ou d'un gel silicone.

13. Plateau de service (1) selon l'une quelconque des revendications 9 à 12, **caractérisé en ce que** la mémoire est recouverte d'un film de protection.

14. Plateau de service (1) selon la revendication précédente, **caractérisé en ce que** le film de protection s'étend jusqu'au bord périphérique du plateau.

15. Plateau de service (1) selon l'une quelconque des revendications 9 à 14, **caractérisé en ce qu'**il comporte une couche intermédiaire apte à porter ou à constituer un décor.

16. Chariot de transport (3) de plateaux selon l'une quelconque des revendications 9 à 15, **caractérisé en ce qu'**il comporte un lecteur/émetteur radiofréquence apte à être associé avec des étiquettes radiofréquence électroniques (10) équipant les plateaux (1) ainsi qu'un écran (4) affichant l'identifiant et l'emplacement dans le chariot de chacun des plateaux.
